(19) Europäisches Patentamt
European Patent Office
Office européen des brevets

(11) **EP 2 963 653 B1**

(12) **EUROPEAN PATENT SPECIFICATION**

(45) Date of publication and mention
of the grant of the patent:
**10.04.2019 Bulletin 2019/15**

(51) Int Cl.:
***H01B 1/06*** *(2006.01)*     ***C01B 35/04*** *(2006.01)*

(21) Application number: **15153668.7**

(22) Date of filing: **03.02.2015**

(54) **ELECTRICALLY CONDUCTIVE THIN FILMS**

ELEKTRISCH LEITFÄHIGE DÜNNSCHICHTEN

FILMS MINCES ÉLECTRO-CONDUCTEURS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.06.2014 KR 20140080187**

(43) Date of publication of application:
**06.01.2016 Bulletin 2016/01**

(73) Proprietor: **Samsung Electronics Co., Ltd.
Gyeonggi-do 443-742 (KR)**

(72) Inventors:
• **Park, Hee Jung
Gyeonggi-do (KR)**
• **Son, Yoon Chul
Gyeonggi-do (KR)**
• **Lee, Woojin
Gyeonggi-do (KR)**
• **Kim, Sang Il
Seoul (KR)**
• **Choi, Jae-Young
443-811, Gyeonggi-do (KR)**
• **Jung, Doh Won
Seoul (KR)**

(74) Representative: **Elkington & Fife LLP
Prospect House
8 Pembroke Road
Sevenoaks, Kent TN13 1XR (GB)**

(56) References cited:
**DE-C1- 4 001 401       JP-A- H0 422 622
JP-A- S55 143 731       JP-B2- 2 989 056
US-A1- 2004 253 501       US-A1- 2008 064 605**

## Description

FIELD OF THE INVENTION

Electrically conductive thin films and electronic devices including the same are disclosed.

BACKGROUND OF THE INVENTION

An electronic device like a flat panel display such as an LCD or LED, a touch screen panel, a solar cell, a transparent transistor, and the like includes an electrically conductive thin film or a transparent electrically conductive thin film. A material for an electrically conductive thin film may desirably have, for example, a high light transmittance of greater than or equal to about 80 % and a low specific resistance of less than or equal to about $10^{-4}$ $\Omega$*cm in a visible light region. The currently-used oxide material may include indium tin oxide ("ITO"), tin oxide (e.g., $SnO_2$), zinc oxide (e.g., ZnO), and the like. The ITO widely used as a transparent electrode material is a degenerate semiconductor having a wide bandgap of 3.75 electron volts (eV) and may be easily sputtered to have a large area. However, since the ITO conventionally has limited conductivity and flexibility in terms of application to a flexible touch panel and a UD-level high resolution display, and also a high price due to its limited reserves, many attempts to replace the ITO have been made.

Recently, a flexible electronic device as a next generation electronic device has drawn attention. Accordingly, development of a material which provides flexibility as well as having transparency and relatively high conductivity other than the above transparent electrode material is desired. Herein, the flexible electronic device includes a bendable or foldable electronic device.

US 2008/0064605 discloses a superconducting magnesium diboride thin film. US 2004/0253501 disclsoes an intermetallic compound containing gold. DE 40 01 401 discloses an electrical conductor for a thermoelectric alkali metal converter. JP H04 22622 discloses a composite material having a boride coating layer.

SUMMARY OF THE INVENTION

Disclosed is a flexible electrically conductive transparent thin film having high conductivity and excellent light transmittance.

Another embodiment provides an electronic device including the electrically conductive transparent thin film. In an embodiment, an electrically conductive transparent thin film includes a compound represented by Chemical Formula 1 and having a layered crystal structure:

$$\text{Chemical Formula 1} \qquad MeB_2$$

wherein, Me is Au, Al, Ag, Mg, Ta, Nb, Y, W, V, Mo, Sc, Cr, Mn, Os, Tc, Ru, Fe, Zr, or Ti.

The electrically conductive thin film may have light transmittance of greater than or equal to about 80 percent (%) for light at a wavelength of about 550 nanometers (nm) at a thickness of less than or equal to 10 nm.

The thin film may include $AuB_2$, $AlB_2$, $AgB_2$, $MgB_2$, $TaB_2$, $NbB_2$, $YB_2$, $WB_2$, $VB_2$, $MoB_2$, $ScB_2$, or a combination thereof.

The electrically conductive thin film may include a monocrystalline compound.

The electrically conductive thin film may have electrical conductivity of greater than or equal to about 5000 Siemens per centimeter (S/cm).

The electrically conductive thin film may have electrical conductivity of greater than or equal to about 10,000 S/cm.

The compound may have a product of an absorption coefficient ("$\alpha$") for light having a wavelength of about 550 nm and a resistivity value ("$\rho$") thereof of less than or equal to about 35 ohms per square ($\Omega/\square$).

The compound may have a product of an absorption coefficient ("$\alpha$") for light having a wavelength of about 550 nm and a resistivity value ("$\rho$") thereof of less than or equal to about 6 $\Omega/\square$.

The electrically conductive thin film may have transmittance of about 90 % for light having a wavelength of 550 nm and sheet resistance of less than or equal to about 60 $\Omega/\square$.

The layered crystal structure may belong to a hexagonal system having a P6/mmm (191) space group.

The electrically conductive thin film may maintain the layered crystal structure after being exposed to air for 60 days or more at 25 °C.

The electrically conductive thin film may include a plurality of nanosheets including the compound, and the nanosheets may contact one another to provide an electrical connection.

The electrically conductive thin film may include a continuous deposition film including the compound.

The electrically conductive thin film may have a thickness of less than or equal to about 100 nm.

Another embodiment provides an electronic device including the electrically conductive thin film.

The electronic device may be a flat panel display, a touch screen panel, a solar cell, an e-window, an electrochromic mirror, a heat mirror, a transparent transistor, or a flexible display.

BRIEF DESCRIPTION OF THE DRAWINGS

The above and other aspects, advantages and features of this disclosure will become more apparent by describing in further detail exemplary embodiments thereof with reference to the accompanying drawings, in which:

FIG. 1 is a schematic view showing an embodiment of a layered crystal structure of a boride compound included in an electrically conductive thin film;

FIG. 2 is a graph of intensity (arbitrary units, a.u.) versus diffraction angle (degrees two-theta, $2\theta$) showing an X-ray diffraction spectrum of a $NbB_2$ polycrystal calcinated body synthesized in Example 1;

FIG. 3 is a graph of intensity (arbitrary units, a.u.) versus diffraction angle (degrees two-theta, $2\theta$) showing an X-ray diffraction spectrum of a $MoB_2$ polycrystal calcinated body synthesized in Example 1;

FIG. 4 is a graph of intensity (arbitrary units, a.u.) versus diffraction angle (degrees two-theta, $2\theta$) showing an X-ray diffraction spectrum of an $YB_2$ polycrystal calcinated body synthesized in Example 1;

FIG. 5 is a graph of intensity (arbitrary units, a.u.) versus diffraction angle (degrees two-theta, $2\theta$) showing an X-ray diffraction spectrum of a $MgB_2$ polycrystal calcinated body synthesized in Example 1;

FIG. 6 is a graph of intensity (arbitrary units, a.u.) versus diffraction angle (degrees two-theta, $2\theta$) showing an X-ray diffraction spectrum of a $ScB_2$ polycrystal calcinated body synthesized in Example 1;

FIG. 7 is a graph of intensity (arbitrary units, a.u.) versus diffraction angle (degrees two-theta, $2\theta$) showing an X-ray diffraction spectrum of a $MoB_2$ polycrystal calcinated body after 2 months in an oxidation stability experiment;

FIG. 8 is a schematic cross-sectional view of an embodiment of an organic light emitting diode device including an electrically conductive thin film;

FIG. 9 is a graph of intensity (arbitrary units, a.u.) versus diffraction angle (degrees two-theta, $2\theta$) showing an X-ray diffraction spectrum of a $MoB_2$ polycrystal calcinated body after 120 days in an oxidation stability experiment;

FIG. 10 is a schematic cross-sectional view showing an embodiment of a structure of a touch screen panel including an electrically conductive thin film.

DETAILED DESCRIPTION OF THE EMBODIMENTS

Advantages and characteristics of this disclosure, and a method for achieving the same, will become evident referring to the following exemplary embodiments together with the drawings attached hereto.

In an embodiment, an electrically conductive transparent thin film includes a compound represented by Chemical Formula 1 and having a layered crystal structure.

$$\text{Chemical Formula 1} \qquad MeB_2$$

In Chemical Formula 1, Me is Au, Al, Ag, Mg, Ta, Nb, Y, W, V, Mo, Sc, Cr, Mn, Os, Tc, Ru, Fe, Zr, or Ti.

The electrically conductive transparent thin film may include $AuB_2$, $AlB_2$, $AgB_2$, $MgB_2$, $TaB_2$, $NbB_2$, $YB_2$, $WB_2$, $VB_2$, $MoB_2$, $ScB_2$, or a combination thereof. In an embodiment, the electrically conductive thin film may include a monocrystalline or polycrystalline compound. The compound of Chemical Formula 1 may be monocrystalline or polycrystalline.

The electrically-conductive thin film has excellent light transmittance as well as remarkably high conductivity and may be actively used in an applied field desiring conductivity and transparency, for example, for a transparent electrode and the like. For example, the electrically conductive thin film may have light transmittance of greater than or equal to about 80 %, greater than or equal to about 85 %, or greater than or equal to about 90 %, or 80% to 90%, for light at a wavelength of about 550 nm at a thickness of less than or equal to 10 nm. In addition, the electrically conductive thin film may simultaneously have a relatively high electrical conductivity (e.g., greater than or equal to about 10,000 S/cm) along with the high light transmittance.

Various efforts have been performed to develop a flexible transparent electrode material having high electrical conductivity and transparency in the visible light region. In this connection, a metal may have high electron density and high electrical conductivity. However, the metal easily reacts with oxygen in air to provide an oxide on the surface, and thus conductivity may be decreased. It has also been attempted to decrease the surface contact resistance by using a ceramic material in which the surface oxidation is decreased and in which the conductivity is excellent. However, with the currently used conductive ceramic material (e.g., indium tin oxide, "ITO") it is hard to accomplish the metal-level conductivity, supply of raw materials is unstable, and particularly, it has insufficient flexibility. On the other hand, efforts to develop a monoatomic layered thin film formed of a layered material having a weak interlayer bonding force have been actively made, since conductive characteristics of graphene as the layered material was reported. In particular, many efforts toward application of the graphene as a highly flexible transparent conductive film material capable of replacing the indium tin oxide ("ITO") having insufficient mechanical characteristics have been made. However, the graphene may hardly show satisfactory transmittance due to a high absorption coefficient (a), and also it rarely has a thickness of greater than or equal to about four sheets of monoatomic layers. On the other hand, most transition metal dichalcogenides ("TMD") known to have a layered crystal structure show satisfactory transmittance but may not be easily applied to form a transparent conductive film due to its equivalent conductivity to that of a semiconductor.

On the contrary, the boride compound of Chemical Formula 1 has high conductivity. For example, the electrically conductive thin film may have conductivity of greater than or equal to about 5000 Siemens per centimeter (S/cm), greater than or equal to about 6000 S/cm, greater than or equal to about 7000 S/cm, greater than or equal to about 10,000 S/cm, or greater than or equal to about 30,000 S/cm.

In addition, the compound of Chemical Formula 1 having a composition ratio of 1:2 between metal and boron may have a layered crystal structure. In this layered crystal structure, unit layers are connected by Van der Waals force, and thus may be slid between layers and manufactured into nanosheets through mechanical exfoliation, liquid phase exfoliation, or the like, providing a thin film having excellent flexibility. Accordingly, the above electrically conductive thin film according to an embodiment may be desirably applied to a flexible electronic device.

In addition, the boride compound of Chemical Formula 1 has a low light absorption coefficient and thus can provide a transmittance of greater than or equal to about 80 %, for example, greater than or equal to about 90 %, in a visible light region. The diboride compound of Chemical Formula 1 in the electrically conductive thin film may have a product of the absorption coefficient ("$\alpha$") of light having a wavelength of about 550 nm and resistivity ("$\rho$") thereof of less than or equal to about 35 $\Omega/\square$, for example, less than or equal to about 6 $\Omega/\square$.

Herein, the absorption coefficient and the resistivity may be obtained from a computer simulation. In other words, the resistivity ("$\rho$") can be obtained by calculating the density of states ("DOS") and the band structure around a Fermi level from the crystal structure of the corresponding metal diboride compounds. In addition, the absorption coefficient ("$\alpha$") for a predetermined wavelength may be calculated from the dielectric constant of the compound obtained by applying the Drude model and considering electron transition due to an interband transition. The simulation for providing an absorption coefficient ("$\alpha$") and the resistivity ("$\rho$") thereof is disclosed in Georg Kresse and Jurgen Furthmuller, The Vienna Ab-initio Simulation Package, , Institut fur Materialphysik, Universitat Wien, Sensengasse 8, A-1130 Wien, Austria, August 24, 2005, the content of which is included herein in its entirety by reference. The simulation procedures are as shown in Table 1:

Table 1

| Calculation | Simulation level | Calculation / simulation |
|---|---|---|
| Atom electron structure | DFT | Structure optimization Band structure calculation |
| Conductive characteristics | Semi-classical Boltzmann transport (const. $\tau$) | Intra-band transition $\sigma \sim (e^2/4\pi^3)\,\tau \int \mathrm{d}k\, v(k)\, v(k)\, (-\partial f/\partial \varepsilon) = ne^2\tau\,/m_{eff} = ne\mu$ $\rho = 1/\sigma$ |
| Dielectric characteristics | DFPT + Drude model | Inter-band transition $\varepsilon(\omega) = \varepsilon_D(\omega) + \varepsilon_B(\omega) = \varepsilon_1(\omega) + i\,\varepsilon_2(\omega)$ |
| Optical characteristics | Ray optics | $n(\omega) + i\,k(\omega) = \varepsilon(\omega)^{1/2}$ Absorption coeff. $\alpha = 4\pi k/\lambda$ |
| $\rho\,\alpha$ calculation | | |
| DFT: density-functional theory DFPT: density-functional perturbation theory Drude model: free electron model for solid $\sigma$, $\tau$, $m_{eff}$, $\mu$, $\rho$: electrical conductivity, relaxation time, effective mass, mobility, and resistivity, respectively $\omega_p$ ($\omega_p$'): plasma frequency and screened plasma frequency, respectively | | |

The description of Table 1 is detailed explained in the follows.

In order to calculate the quantum mechanical states of materials, the first-principles calculation (first-principles calculation: calculation from a fundamental equation without outside parameters) based on the DFT method (density-functional-theory: method of solving a quantum mechanical equation by describing an electron distribution using an electron density function instead of a wave function) is performed to calculate the quantum mechanical state of electron. The electron state is calculated using the first principle DFT code of VASP (Vienna Ab initio simulation package code). A 2DEG candidate material group is selected from ICSD (Inorganic Crystal Structure Database), and it may be calculated by inputting atom structure information and depicting electrons for energy levels, so as to provide an energy density function and a state density function on a k-space of the electrons.

The electron structure calculated through the DFT simulation provides E-k diagram (band structure) and DOS (Density of State: electron state density, electron state density function per energy) information, and may determine whether it is a metallically conductive material (DOS(E) > 0) or a semiconductive conductive material (DOS(E) = 0) depending upon if the DOS is present in the maximum energy level ("E") in which electrons may be present. In order to anticipate conductivity ("σ") of a conductive metal material, the conductive characteristics are estimated by introducing a semi-classical Boltzmann transport model. In this case, T of an electron (relaxation time: time in which electron may move without collision) is assumed to be constant.

$$\text{Boltzmann-Transport}$$
$$\sigma = (e^2/4\pi^3)\,\tau \int \mathrm{d}\boldsymbol{k}\ \boldsymbol{v}(k)\,\boldsymbol{v}(k)\,(-\partial f/\partial E)$$

Herein, $\tau$ is a relaxation time of an electron; k is a state at a k-space of the electron; v(k) is a speed of the electron at the k state; f is a Fermi-Dirac distribution; and E is energy. In this case, v (k) may be calculated from an E-k diagram. $\sigma/\tau$ may be obtained from the above relationship equation.

The mechanism determining the transmittance absorption of the conductive material broadly includes an intra-band absorption due to plasma-like oscillation of free electrons and an intra-band absorption due to band-to-band transition of bound electrons. The quantum simulation process showing each mechanism may be obtained by the process such as in Table 2, Simulation table for Optical Properties, as disclosed in Ashcroft and Mermin, Solid State Physics.

Table 2: Simulation table for Optical Properties

| STEP | Category | Calculation | Results | Method (tool) |
|---|---|---|---|---|
| 8 | Optical simulation | Inter-band transition | $\varepsilon B(w) = \varepsilon B1(w) + i\,\varepsilon\,B2(w)$ | DFT (VASP) |
| 9 | Optical simulation | Plasma frequency Intra-band transition | $\varepsilon\,D(w) = \varepsilon\,D1(w) + i\,\varepsilon\,D2(w)$ | Boltzmann transport DFT (VASP) or Post-processing |
| 10 | Optical simulation | Total dielectric constant Refractive index | | Post-processing |
| 11 | Optical simulation | Reflectance Absorption coefficient | Plasma freq. Reflectance Absorption co. Transmittance | Post-processing |
| B denotes a band, and D denotes a Drude model. | | | | |

In this case, the relationship of the dielectric constant ("ε"), the refractive index ("n"), and the absorption coefficient ("α") of a solid is shown as follows. The dielectric constant may be calculated considering both the part of the dielectric constant ("ε") caused from interband transition and the part of the dielectric constant ("ε") caused from intraband transition.

$$\varepsilon(\omega) = \varepsilon_{(Drude)} + \varepsilon_{(Band)}$$

$$= \varepsilon_1(\omega) + \mathbf{i}\,\varepsilon_2(\omega) \qquad \text{dielectric function}$$

$$(\,n + ik\,)^2 = \varepsilon(\omega) \qquad \text{refraction function}$$

$$\alpha(\omega) = 4\pi k/\lambda \qquad \text{absorption coefficient}$$

As in the above conductivity calculation, the case of inter-band absorption may be calculated through the pre-calculated band structure; on the other hand, the case of intra-band absorption of free electrons is mimicked as follows through the conductivity and optical coefficient calculation based on the Drude modeling, as disclosed in Jinwoong Kim, Journal of Applied Physics 110, 083501 2011, the content of which is incorporated herein by reference in its entirety.

**CGS UNIT**

$$\sigma(\omega) = \sigma_0 / [1 - i\,\omega\tau] \qquad \textit{AC conductivity}$$
$$\sigma_0 = ne^2\tau/m \qquad \textit{DC conductivity}$$
$$\varepsilon(\omega) = 1 + i\,(4\pi/\omega)\,\sigma(\omega)$$

$$\omega_p^2\,\tau \quad = \sigma_0/\varepsilon_0 \qquad\qquad \text{(si)}$$
$$= 4\pi\,\sigma_0 \qquad\qquad \text{(cgs)}$$

$$\varepsilon(\omega) = 1 + i\,(4\pi/\omega)\,\sigma_0 / [1 - i\,\omega\tau] = 1 - (4\pi\,\sigma_0/\omega) / [i + \omega\tau]$$
$$= 1 - (4\pi\,\sigma_0/\omega)(-i + \omega\tau) / [1 + (\omega\tau)^2]$$
$$= 1 - (\omega_p\tau)^2 / [1 + (\omega\tau)^2]$$
$$+ i\,(\omega_p\tau)^2 / [\omega\tau\,(1 + (\omega\tau)^2)]$$

$$\epsilon_1 = 1 - \frac{\omega_p^2\tau^2}{1 + \omega^2\tau^2} \qquad\qquad n = \frac{1}{\sqrt{2}}\left(\epsilon_1 + (\epsilon_1^2 + \epsilon_2^2)^{1/2}\right)^{1/2}$$

$$\epsilon_2 = \frac{\omega_p^2\tau^2}{\tau\omega(1 + \omega^2\tau^2)} \qquad\qquad \kappa = \frac{1}{\sqrt{2}}\left(-\epsilon_1 + (\epsilon_1^2 + \epsilon_2^2)^{1/2}\right)^{1/2}$$

$\omega$ : frequency
$\omega_p$ : plasma frequency
k : extinction coefficient

As in the above, the calculated dielectric function of a material may be obtained by associating the calculated inter-band absorption and the intra-band absorption, and thereby the optical constants may be mimicked, and then finally, the reflectance ("R"), the absorption coefficient ("a"), and the transmittance ("T") of the material may be calculated.

The electrical conductivity (a simulation value of monocrystals), absorption coefficient ("$\alpha$"), the resistivity ("$\rho$") and a product thereof, and sheet resistance at transmittance of 90 % of the diboride compound represented by Chemical Formula 1 are obtained according to the above method and are provided in Table 3.

Table 3

| Composition | $\sigma$ [S/cm] | $\rho$ (Q*cm) | $\alpha$ (1/cm) | $\rho$ *$\alpha$ | Rs ($\Omega/\square$) / T>0.90 |
|---|---|---|---|---|---|
| $AuB_2$ | 1.09E+05 | 9.18E-06 | 1.60E+05 | 1.47E+00 | 1.39E+01 |
| $AlB_2$ | - | 7.48E-06 | 2.47E+05 | 1.85E+00 | 1.75E+01 |
| $AgB_2$ | 1.01 E+05 | 9.89E-06 | 2.55E+05 | 2.52E+00 | 2.39E+01 |
| $MgB_2$ | - | 9.28E-06 | 3.60E+05 | 3.34E+00 | 3.17E+01 |
| $TaB_2$ | - | 5.8E-06 | 6.02E+05 | 3.49E+00 | 3.31E+01 |
| $NbB_2$ | - | 7.27E-06 | 5.46E+05 | 3.97E+00 | 3.77E+01 |
| $YB_2$ | - | 1.69E-05 | 2.70E+05 | 4.56E+00 | 4.31 E+01 |
| $WB_2$ | - | 5.59E-06 | 8.78E+05 | 4.91 E+00 | 4.66E+01 |

(continued)

| Composition | σ [S/cm] | ρ (Q*cm) | α (1/cm) | ρ *α | Rs (Ω/□) / T>0.90 |
|---|---|---|---|---|---|
| $VB_2$ | - | 9.82E-06 | 5.48E+05 | 5.38E+00 | 5.11 E+01 |
| $MoB_2$ | - | 7.78E-06 | 7.50E+05 | 5.84E+00 | 5.54E+01 |
| $ScB_2$ | - | 1.54E-05 | 3.84E+05 | 5.91E+00 | 5.63E+01 |
| $CrB_2$ | 5.71E+04 | 1.75E-05 | 4.31E+05 | 7.54E+00 | 7.16E+01 |
| $MnB_2$ | 4.29E+04 | 2.33E-05 | 3.63E+05 | 8.46E+00 | 8.04E+01 |
| $OsB_2$ | 4.93E+04 | 2.03E-05 | 4.63E+05 | 9.40E+00 | 8.91E+01 |
| $TcB_2$ | 3.73E+04 | 2.68E-05 | 3.69E+05 | 9.89E+00 | 9.40E+01 |
| $RuB_2$ | 3.52E+04 | 2.84E-05 | 3.63E+05 | 1.03E+01 | 9.80E+01 |
| $FeB_2$ | 3.41E+04 | 2.94E-05 | 3.76E+05 | 1.11E+01 | 1.05E+02 |
| $ZrB_2$ | 2.64E+04 | 3.79E-05 | 5.42E+05 | 2.05E+01 | 1.95E+02 |
| $TiB_2$ | 2.16E+04 | 4.63E-05 | 6.77E+05 | 3.13E+01 | 2.98E+02 |

The product of the resistivity ("ρ") and the absorption coefficient ("α") may be represented by the product of sheet resistance ("$R_s$") and transmittance ("lnT") according to the following equation. Accordingly, the compound having the lesser of the product ρ*α may be better for the material of the electrically conductive thin film.

$$e^{-\alpha t} = T \text{ (i.e., } \alpha t = -\ln T)$$

$$R_s = \rho/t$$

$\therefore \rho*\alpha = Rs * (-\ln T)$
α: absorption coefficient
ρ: resistivity
T: transmittance (at $\lambda$ = 550 nm)
t: thickness
Rs: sheet resistance

The compound included in the electrically conductive thin film according to the an embodiment may have a product of the absorption coefficient and the resistivity (i.e., $R_s$ * (-lnT)) of less than or equal to about 35, for example, less than or equal to about 6, or about 0.1 to about 35, or about 1 to about 6, so as to provide an electrically conductive thin film having high conductivity and excellent transparency (i.e., low sheet resistance and high light transmittance).

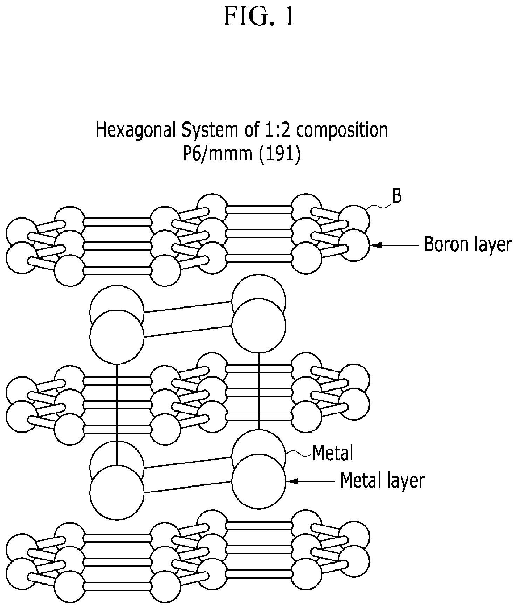

The electrically conductive thin film according to an embodiment includes an inorganic material including a metal and a non-metal element, and may have very high conductivity at a thin thickness. Without being bound by any particular theory, the electrically conductive thin film includes two-dimensionally confined electrons in the layered crystal structure, and as the electrons may be moved with high mobility even in a thin thickness, it is considered to accomplish very high conductivity with high transparency. In addition, the electrically conductive thin film including the compound having a layered crystal structure may be slid between layers to provide high flexibility. The layered crystal structure of the diboride compound represented by the above Chemical Formula 1 may belong to a hexagonal system having a P6/mmm (191) space group. FIG. 1 is a schematic view showing atom arrangement of the boride-based material having a composition ratio of 1:2 and belonging to a hexagonal system having a P6/mmm (191) space group. This atom arrangement may be examined through a Vesta program based on the atom arrangement information of a corresponding material, and herein, the atom arrangement information is acquired from an inorganic compound database ("ICSD"). The electrically conductive thin film has excellent oxidation stability. For example, the electrically conductive thin film may maintain the layered crystal structure when exposed to air for greater than or equal to about 60 days, and even for greater than or equal to about 120 days, at about 25 °C.

Referring to FIG. 1, the diboride compound represented by Chemical Formula 1 has an atom arrangement in which a metal layer and a boron layer are alternately stacked. The boride compound represented by Chemical Formula 1 has a layered structure and includes a metal bond, a covalent bond, and an ion bond. In particular, the metal layer and the boron layer have a weak ion bond, and thus their unit structure layers may be relatively easily delaminated and exfoliated. For example, the boride compound of Chemical Formula 1 having a layered crystal structure may have interlayer cleavage energy as shown in Table 4.

Table 4

| Composition | Cleavage energy (eV/A$^2$) |
| --- | --- |
| AuB$_2$ | 0.04843 |
| AgB$_2$ | 0.103185 |
| AlB$_2$ | 0.146317 |
| WB$_2$ | 0.224454 |
| MgB$_2$ | 0.254099 |
| MoB$_2$ | 0.273405 |
| TaB$_2$ | 0.3105 |
| ScB$_2$ | 0.360144 |
| NbB$_2$ | 0.37174 |
| VB$_2$ | 0.407442 |
| YB$_2$ | 0.46914 |

Referring to Table 4, the diboride compound of Chemical Formula 1 turns out to have low cleavage energy and thus may be manufactured into nanoflakes through a process such as liquid phase exfoliation and the like, and the nanoflakes may be manufactured into a thin film having high conductivity and high light transmittance.

According to an embodiment, the electrically conductive thin film may be obtained by preparing a raw material of a metal diboride compound represented by Chemical Formula 1, a polycrystalline or a monocrystalline bulk material (e.g., a calcinated body) prepared from the same, or a powder obtained from the bulk material, and may be formed in an electrically conductive transparent thin film from the raw material powder, the bulk material, or the powder thereof by deposition or the like. Alternatively, the electrically conductive thin film may be obtained by liquid phase exfoliation of the bulk material powder to provide nanosheets and forming the obtained nanosheets into a thin film.

The raw material of the metal diboride compound may include each atom and a compound including each atom. For example, the raw material may include Au, Al, Ag, Mg, Ta, Nb, Y, W, V, Mo, Sc, Cr, Mn, Os, Tc, Ru, Fe, Zr, or Ti. For example, the raw material may include a boron powder.

The polycrystalline bulk material may be prepared from the above raw material according to a quartz ampoule method, an arc melting method, a solid phase reaction, and the like.

For example, the quartz ampoule method includes introducing the raw material into a quartz tube or an ampoule made of a metal and sealing the same under vacuum, and heating the same to perform a solid phase reaction or a melting process.

The arc melting method includes introducing the raw material atom into a chamber and performing an arc discharge under an inert gas (e.g., nitrogen, or argon) atmosphere to melt the raw material atom and solidify the same. The raw material may be a powder or a bulk material (e.g., a pellet). The raw powder may be molded in a uniaxial direction into a bulk material if desired. The arc melting method may include arc melting at least twice, and the arc melting is performed by turning a pellet over upward and downward in order to uniformly heat-treat the pellet. During the arc melting, a current may be applied without a particular strength limit but may have strength of great than or equal to about 50 amperes (A), for example, greater than or equal to about 200 A. The current strength may be less than or equal to about 350 A, for example, less than or equal to 300 A, but is not limited thereto.

The solid phase reaction may include mixing the raw powder to provide a pellet and heat-treating the obtained pellet, or heat-treating the raw powder mixture to provide a pellet and sintering the same.

The obtained polycrystalline bulk material may be highly densified by sintering or the like. The highly densified material may be used as a specimen for measuring electrical conductivity. The high densifying may be performed by a hot pressing method, a spark plasma sintering method, a hot forging method, or the like. The hot pressing method includes applying the powder compound into a mold having a predetermined shape and forming the same at a high temperature of, for example, about 300 °C to about 800 °C, and a high pressure of, for example, about 30 pascals (Pa) to about 300 megapascals (MPa). The spark plasma sintering method includes applying the powder compound with high voltage current under a high pressure, for example, a current of about 50 A to about 500 A under a pressure of about 30 MPa to about 300 MPa to sinter the material for a short time. The hot forging method may include compressing and sintering the powder compound at a high temperature of, for example, about 300 °C to about 700 °C.

The monocrystalline material may be obtained by providing a crystal ingot or growing a monocrystal. The crystal ingot may be obtained by heating a congruent melting material at a temperature higher than the melting point of the material and then slowly cooling the same. For example, the raw material mixture is introduced into a quartz ampoule, is melted after sealing the ampoule under vacuum, and then the melted mixture is slowly cooled to provide a crystalline ingot. The crystal particle size may be controlled by adjusting the cooling speed of the melted mixture. The monocrystal growth may be performed by a metal flux method, a Bridgman method, an optical floating zone method, a vapor transport method, or the like. The metal flux method is a method including melting the raw powder in a crucible together with additional flux at a high temperature and slowly cooling the same to grow crystals at a predetermined temperature. The Bridgman method includes introducing the raw material into a crucible and heating the same at a high temperature until the raw material is dissolved at the terminal end of the crucible, and then slowly moving the high temperature zone and locally dissolving the sample to pass the entire sample through the high temperature zone, so as to grow a crystal. The optical floating zone method is a method including forming a raw material element into a rod-shaped seed rod and a feed rod, locally melting the sample at a high temperature by focusing lamp light on the feed rod, and slowly pulling up the melted part to grow a crystal. The vapor transport method includes introducing the raw element into the bottom part of a quartz tube and heating a part of the raw element, and leaving the upper part of the quartz tube at a low temperature to perform a solid phase reaction at a low temperature while vaporizing the raw element to grow a crystal. The electrical conductivity of the obtained monocrystalline material may be measured according to a DC 4-terminal method.

The obtained polycrystalline or monocrystalline bulk material is pulverized to provide crystal powders. The pulverization may be performed by any suitable method such as a ball mill method without particular limitation. After the pulverization, the powder having a uniform size may be provided using, for example, a sieve.

The obtained polycrystal or monocrystal bulk material is used as a target or the like of vapor deposition to provide a thin continuous film (i.e., an electrically conductive thin film) including the compound. The vapor deposition may be performed by a physical vapor deposition method such as a thermal evaporation and sputtering, chemical deposition ("CVD"), atomic layer deposition ("ALD"), or pulsed laser deposition. The deposition may be performed using any known or commercially available devices. The conditions of deposition may be different according to the kind of compound and the deposition method, but are not particularly limited.

According to another embodiment, the bulk material of the above compound or the powder thereof may be produced into an electrically conductive thin film by liquid phase exfoliation ("LPE") of the bulk material of the compound or the powder thereof to provide a plurality of nanosheets, and contacting the plurality of nanosheets to provide an electrical connection.

The liquid phase exfoliation may be performed through ultra-sonication of the bulk material or powder in an appropriate solvent. Examples of the useable solvent may include water, alcohol (e.g., isopropyl alcohol, ethanol, or methanol), N-methyl pyrrolidone ("NMP"), hexane, benzene, dichlorobenzene, toluene, chloroform, diethylether, dichloromethane ("DCM"), tetrahydrofuran ("THF"), ethyl acetate ("EtOAc"), acetone, dimethyl formamide ("DMF"), acetonitrile ("MeCN"), dimethyl sulfoxide ("DMSO"), ethylene carbonate, propylene carbonate, $\gamma$-butyrolactone, $\gamma$-valerolactone, a perfluorinated aromatic solvent (e.g., hexafluorobenzene, octafluorotoluene, pentafluorobenzonitrile, and pentafluoropyridine), or a combination thereof, but are not limited thereto.

The solvent may further include an additive such as a surfactant in order to help the exfoliation and prevent agglomeration of the exfoliated nanosheets. The surfactant may be sodium dodecyl sulfate ("SDS") or sodium dodecylbenzenesulfonate ("SDBS").

The ultrasonication may be performed by using any suitable ultrasonication device, and conditions (e.g., ultrasonication time) are not particularly limited, but may be appropriately selected considering a solvent used and a powder concentration in the solvent. For example, the ultrasonication may be performed for greater than or equal to about 1 hour, for example, for about 1 hour to about 10 hours, or about 1 to about 2 hours, but is not limited thereto. The powder concentration in the solvent may be greater than or equal to about 0.01 gram per milliliter (g/mL), for example, within a range from about 0.01 g/mL to about 1 g/L, but is not limited thereto.

In order to promote the exfoliation, lithium atoms may be intercalated into the compound having an interlayered crystal structure. According to an embodiment, the compound is immersed in an alkylated lithium compound (e.g., butyllithium) solution in an aliphatic hydrocarbon solvent such as hexane to intercalate lithium atoms into the compound, and the obtained product is ultrasonicated to provide a plurality of nanosheets including the compound. For example, by inputting the obtained product into water, water and the intercalated lithium ions may react to generate hydrogen between layers of the crystal structure, so as to accelerate the interlayer separation. The obtained nanosheets are separated according to an appropriate method (e.g., centrifugation) and cleaned.

In the electrically conductive thin film including the nanosheets, the nanosheets physically contact one another to provide an electrical connection. When the nanosheets are physically connected to provide a thin film, the film may have more improved transmittance. The obtained film may have coverage of greater than or equal to about 50 %. The obtained film may have high transmittance (e.g., greater than or equal to about 80 %, or greater than or equal to about 85 %) when the thickness is less than or equal to about 20 nm, for example, less than or equal to about 5 nm. The film using a nanosheet may be manufactured in any conventional method. For example, the formation of the film may be performed by dip coating, spray coating, printing after forming an ink or a paste, and the like.

According to an embodiment, the manufactured nanosheets are added to deionized water, and the resultant dispersion is again treated with ultrasonic waves. An organic solvent having non-miscibility with water (e.g., an aromatic hydrocarbon such as xylene or toluene) is added to the ultrasonicated dispersion. When the mixture is shaken, a thin film including nanosheets is formed at the interface between the water and the organic solvent. When a clean, wetted, and oxygen plasma-treated glass substrate is slightly dipped to the interface and taken out, the thin film including nanosheets is spread out on the substrate at the interface. The thickness of the thin film may be adjusted by controlling a nanosheet concentration per area on the surface of the water/organic solvent and a speed/angle when the substrate is taken out.

The electrically conductive thin film shows high conductivity, high light transmittance, and excellent flexibility, and thus may replace an electrode including a transparent conductive oxide such as ITO, ZnO, and the like and a transparent film including an Ag nanowire.

Another embodiment provides an electronic device including the above electrically conductive thin film. The electrically conductive thin film is the same as described above. The electronic device may include, for example, a flat panel display (e.g., an LCD, an LED, and an OLED), a touch screen panel, a solar cell, an e-window, a heat mirror, a transparent transistor, or a flexible display, but is not limited thereto.

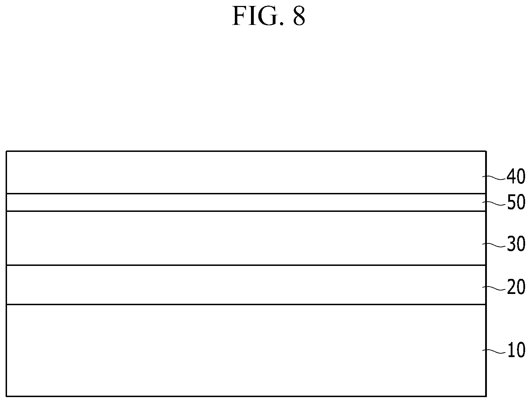

FIG. 8 is a cross-sectional view of an organic light emitting diode device including an electrically conductive thin film according to an embodiment.

An organic light emitting diode device according to an embodiment includes a substrate 10, a lower electrode 20, an upper electrode 40 facing the lower electrode 20, and an emission layer 30 interposed between the lower electrode 20 and the upper electrode 40.

The substrate 10 may be made of an inorganic material such as glass, or an organic material such as polycarbonate, polymethyl methacrylate, polyethylene terephthalate, polyethylene naphthalate, polyamide, polyethersulfone, or a combination thereof, or a silicon wafer.

One of the lower electrode 20 and the upper electrode 40 is a cathode and the other is an anode. For example, the lower electrode 20 may be an anode and the upper electrode 40 may be a cathode.

At least one of the lower electrode 20 and the upper electrode 40 may be a transparent electrode. When the lower electrode 10 is a transparent electrode, the organic light emitting diode device may have a bottom emission structure in which light is emitted toward the substrate 10, while when the upper electrode 40 is a transparent electrode, the organic light emitting diode device may have a top emission structure in which light is emitted toward the opposite of the substrate 10. In addition, when the lower electrode 20 and upper electrode 40 are both transparent electrodes, light may be emitted toward the substrate 10 and the opposite of the substrate 10.

The transparent electrode is made of the above electrically conductive thin film. The electrically conductive thin film is the same as described above. The electrically conductive thin film may have high electron density. By using the electrically conductive thin film, the conventional LiF/Al or MgAg alloy may be substituted to a single material.

The emission layer 30 may be made of an organic material inherently emitting one among three primary colors such as red, green, blue, and the like, or a mixture of an inorganic material with the organic material, for example, a polyfluorene derivative, a (poly)paraphenylene vinylene derivative, a polyphenylene derivative, a polyfluorene derivative, a polyvinylcarbazole, a polythiophene derivative, or a compound prepared by doping these polymer materials with a perylene-based pigment, a coumarin-based pigment, a rhodamine-based pigment, rubrene, perylene, 9,10-diphenylanthracene, tetraphenylbutadiene, Nile red, coumarin, quinacridone, and the like. An organic light emitting device displays a desirable image by a spatial combination of primary colors emitted by an emission layer therein.

The emission layer 30 may emit white light by combining basic colors such as three primary colors of red, green, and blue, and in this case, the color combination may emit white light by combining the colors of adjacent pixels or by combining colors laminated in a perpendicular direction.

An auxiliary layer 50 may be positioned between the emission layer 30 and the upper electrode 40 to improve luminous efficiency of the emission layer 30. In the drawing, the auxiliary layer 50 is shown only between the emission layer 30 and the upper electrode 40, but it is not limited thereto. The auxiliary layer 50 may be positioned between the emission layer 30 and the lower electrode 20, or between the emission layer 30 and the upper electrode 40 and between the emission layer 30 and the lower electrode 20.

The auxiliary layer 50 may include an electron transport layer ("ETL") and a hole transport layer ("HTL") for balancing between electrons and holes, an electron injection layer ("EIL"), a hole injection layer ("HIL") for reinforcing injection of electrons and holes, and the like. It may include one or more layers selected therefrom.

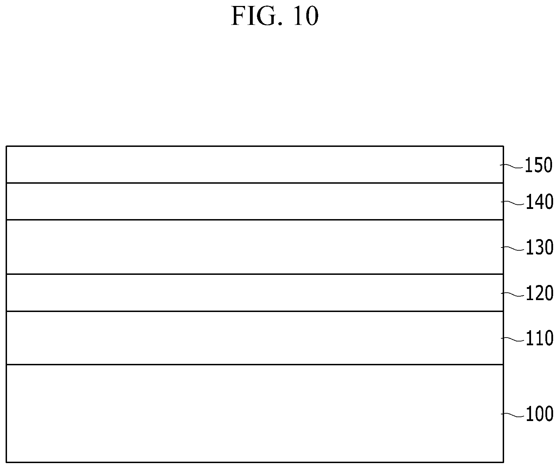

In an exemplary embodiment, the electronic device may be a touch screen panel ("TSP"). The detailed structures of the touch screen panel are well known. The schematic structure of the touch screen panel is shown in FIG. 10. Referring to FIG. 10, the touch screen panel may include a first transparent conductive film 110, a first transparent adhesive layer 120 (e.g., an optically clear adhesive: "OCA") film, a second transparent conductive film 130, a second transparent adhesive layer 140, and a window 150 for a display device on a panel 100 for a display device (e.g., an LCD panel). The first transparent conductive film and/or the second transparent conductive film may be the above electrically conductive thin film.

In addition, an example of applying the electrically conductive thin film to an organic light emitting diode device or a touch screen panel (e.g., a transparent electrode of TSP) is illustrated, but the electrically conductive thin film may be used as an electrode for all electronic devices including a transparent electrode without a particular limit, for example, a pixel electrode and/or a common electrode for a liquid crystal display ("LCD"), an anode and/or a cathode for an organic light emitting diode device, and a display electrode for a plasma display device.

Hereinafter, the embodiments are illustrated in more detail with reference to examples. These examples, however, are not in any sense to be interpreted as limiting the scope of this disclosure.

Example

Example 1: Preparation of Polycrystal Bulk Material

An aluminum (Al) powder, a magnesium (Mg) powder, a molybdenum (Mo) powder, a scandium (Sc) powder, an yttrium (Y) powder, a tungsten (W) powder, a vanadium (V) powder, a niobium (Nb) powder, or a tantalum (Ta) powder (purity: 99.95 %, Manufacturer: LTS) and a boron powder (purity: 99.9 %, Manufacturer: LTS) are mixed in a mole ratio of 1:2 in a glove box to prepare 3 g of a mixture based on the total weight of a specimen, and the mixture is molded in a uniaxial direction to form a bulk-shaped article. The molded article is loaded in a Cu hearth of arc melting equipment (Vacuum Arc Furnace, Yeintech), and the equipment is set to have an internal vacuum degree of less than or equal to $10^{-3}$ torr by operating a diffusion pump. Then, argon gas is injected into the equipment, and an arc is generated by moving an arc tip near a sample and adjusting a distance between the arc tip and the sample in a range of 0.5 to 1 cm after turning on an arc switch. Herein, a current is adjusted to have strength ranging from 200 to 250 amps to melt the sample. The sample is turned over upward and downward during the melting to secure homogeneity of the sample. The sample is cooled down after 10 to 20 minutes, obtaining a polycrystal bulk material.

Electrical conductivity of the bulk material is measured by using ULVAC-Riko ZEM-3 equipment under a condition of room temperature/normal pressure with a DC 4-point probe technique, and the results are provided in Table 5.

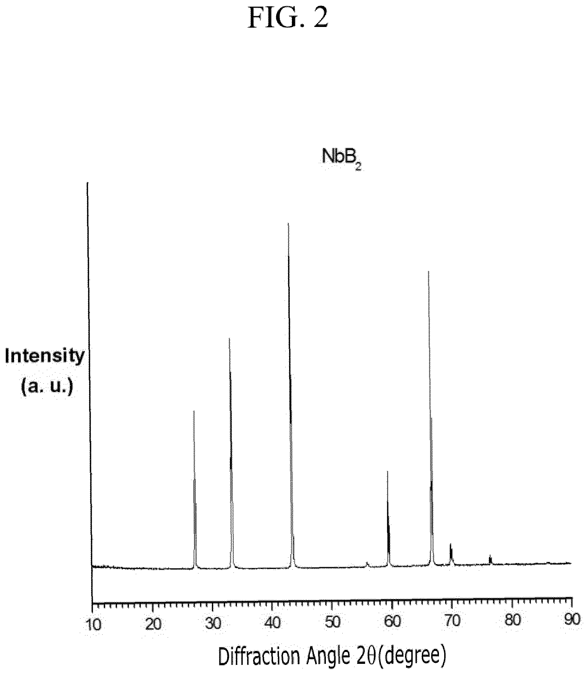

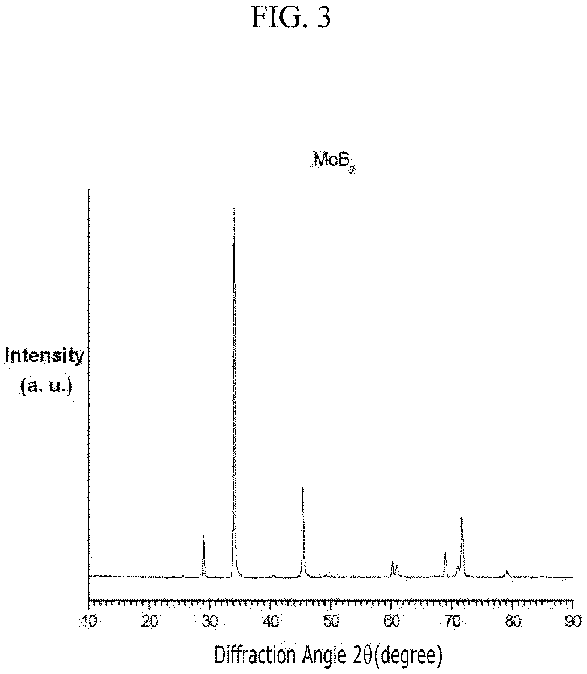

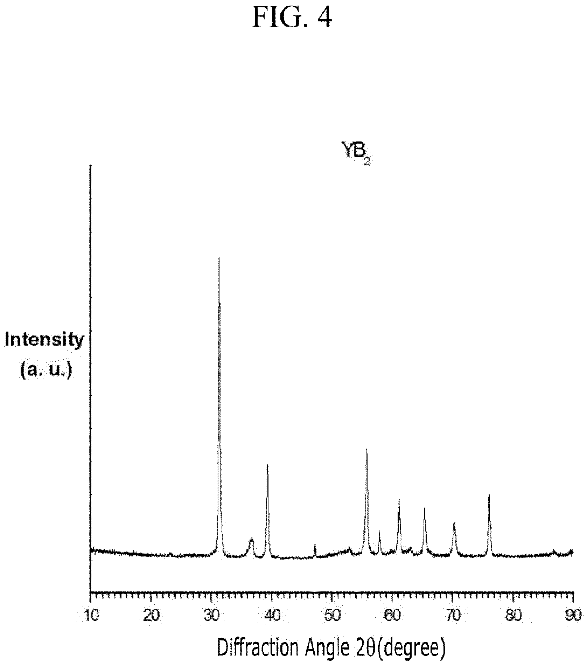

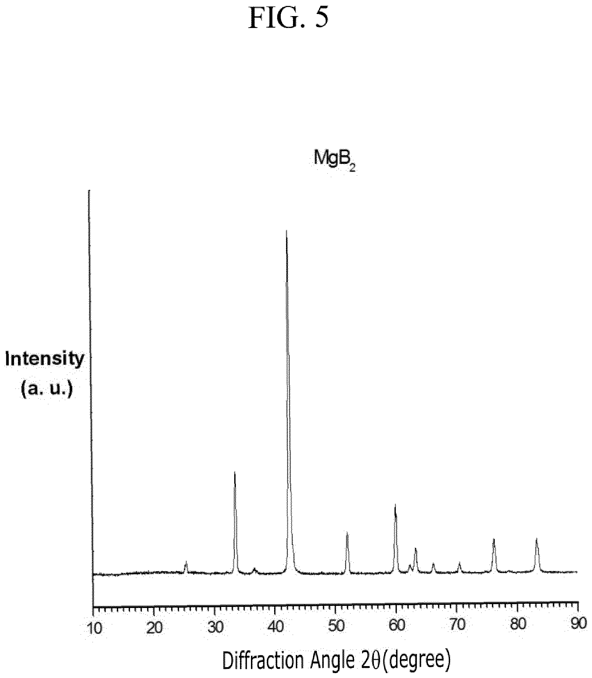

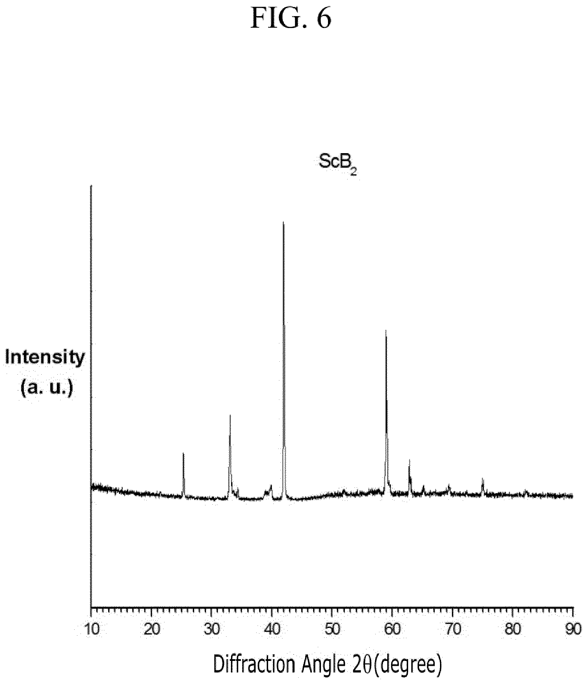

The manufactured niobium (Nb) diboride polycrystal calcinated body, molybdenum (Mo) diboride polycrystal calcinated body, yttrium (Y) diboride polycrystal calcinated body, magnesium (Mg) diboride polycrystal calcinated body, and scandium (Sc) diboride polycrystal calcinated body are analyzed through X-ray diffraction, and the results are respectively provided in FIGS. 2 to 6. Based on the results of FIGS. 2 to 6, the synthesized metal diboride polycrystal bulk materials turn out to include a hexagonal P6/mmm (191) layered structure.

Table 5

| Material composition | Crystal structure Crystal system/Space group | $\sigma$(S/cm) |
|---|---|---|
| $AlB_2$ | Hexagonal, P6/mmm (191) | 24716 |
| $MgB_2$ | Hexagonal, P6/mmm (191) | 16958 |
| $MoB_2$ | Hexagonal, P6/mmm (191) | 10069 |
| $ScB_2$ | Hexagonal, P6/mmm (191) | 32515 |
| $YB_2$ | Hexagonal, P6/mmm (191) | 16868 |
| $WB_2$ | Hexagonal, P6/mmm (191) | 12865 |
| $VB_2$ | Hexagonal, P6/mmm (191) | 10565 |
| $NbB_2$ | Hexagonal, P6/mmm (191) | 15896 |
| $TaB_2$ | Hexagonal, P6/mmm (191) | 13969 |

Referring to the results of Table 5, the diboride compounds of the examples have remarkably high conductivity (e.g., greater than or equal to twice or five times) compared with a conventional ITO electrode (about 5000 S/cm).

Example 2: Oxidation Stability of Thin Film

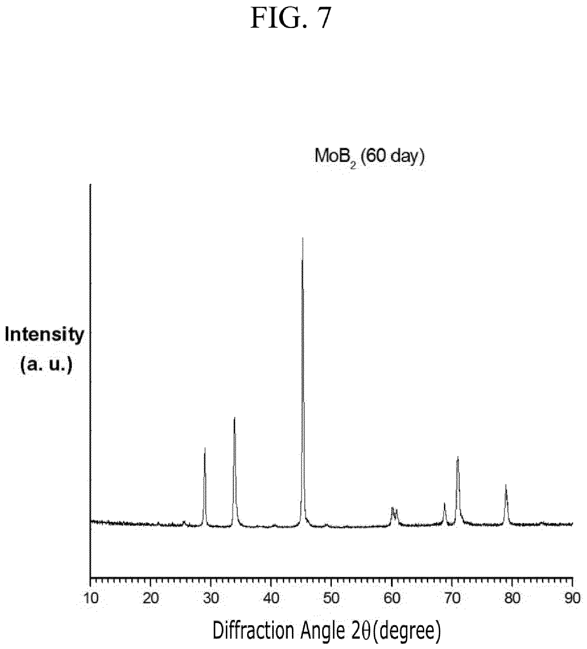

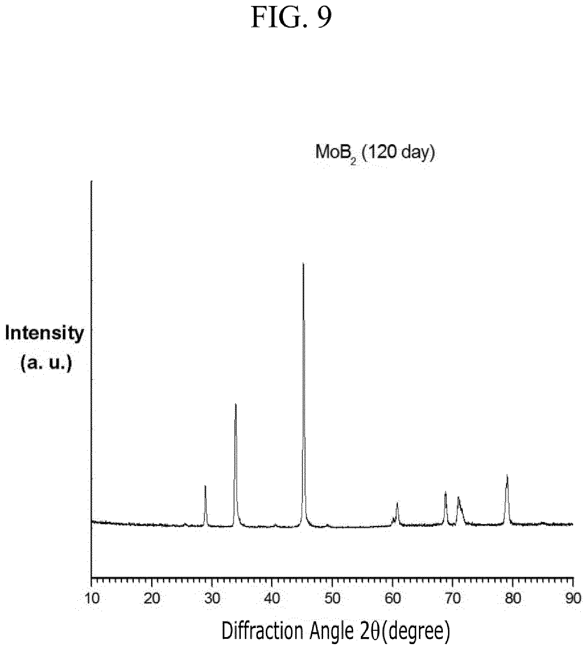

The molybdenum (Mo) diboride polycrystal calcinated body according to Example 1 is allowed to stand at room temperature for 60 days or 120 days and then analyzed through X-ray diffraction. The results are respectively provided in FIGS. 7 and 9.

Based on the results in FIGS. 7 and 9, the molybdenum (Mo) diboride polycrystal calcinated body maintains a crystal structure even through allowed to stand at room temperature for a long time, and thus turns out to have excellent oxidation stability. This result shows that the transparent conductive film including the above diboride compound may be applied to an electrode and the like without passivation for preventing oxidation.

Example 3: Anisotropic Electrical Conductivity

In-plane conductivity ("$s_x$") and out-of-plane conductivity ("$s_y$") of the nine kinds of the above metal diboride compounds according to Example 1 and $AuB_2$ and $AgB_2$ are calculated by using the Vienna Ab initio simulation package ("VASP") and Boltzmann Transport Properties ("BoltzTraP") under the assumption that the compounds are monocrystalline calcinated bodies, and the results are provided in Table 6.

Table 6

|  | $\sigma_x$ (S/cm) | $\sigma_z$ (S/cm) | $\sigma_x / \sigma_z$ |
|---|---|---|---|
| $AuB_2$ | 1.09E+05 | 1.42E+05 | 7.67E-01 |
| $AgB_2$ | 1.01 E+05 | 1.41 E+05 | 7.19E-01 |
| $AlB_2$ | 1.34E+05 | 2.06E+05 | 6.48E-01 |
| $WB_2$ | 1.79E+05 | 2.52E+05 | 7.10E-01 |
| $MgB_2$ | 1.08E+05 | 9.02E+04 | 1.19E+00 |
| $MoB_2$ | 1.29E+05 | 1.61E+05 | 7.98E-01 |
| $TaB_2$ | 1.72E+05 | 1.85E+05 | 9.33E-01 |
| $ScB_2$ | 6.48E+04 | 5.76E+04 | 1.13E+00 |
| $NbB_2$ | 1.38E+05 | 1.51E+05 | 9.13E-01 |
| $VB_2$ | 1.02E+05 | 1.30E+05 | 7.82E-01 |
| $YB_2$ | 5.93E+04 | 4.41E+04 | 1.35E+00 |

Referring to the results of Table 6, the metal diboride material does not have high anisotropic conductivity.

Example 4: Manufacture of Continuous Thin Film by Deposition

The $MgB_2$ calcinated body according to Example 1 as a target is pulsed laser deposited ("PLD") on an $Al_2O_3$ substrate under the following conditions by using a Nd/YAG laser.
PLD equipment: PLD 5000 Deposition Systems, PVD Products
Output: 60 mJ/cm$^2$
Time: 20 min
Substrate temperature: 600 °C
Vacuum degree: 2* 10$^{-6}$ Torr
The obtained $MgB_2$ deposition film has a thickness of about 20 nm.

Example 5: Manufacture of Thin Film Including Metal Diboride Nanoflakes

The $MgB_2$ calcinated body according to Example 1 is ground. 0.1 g of the obtained powder is dispersed into 100 mL of a hexane solvent in which n-butyl lithium is dissolved, and the solution is agitated for 72 hours. Then, interlayer separation occurs therein, obtaining a dispersion including $MgB_2$ nanoflakes.

The obtained nanosheets are centrifuged, and then the obtained precipitates are cleaned with water and centrifuged.

The nanosheet precipitates are put in a vial, 3 mL of deionized water is added thereto, and the mixture is ultrasonicated. Then, 2-3 mL of toluene is added thereto, and then a thin film including the nanosheets on the interface between an aqueous layer and a toluene layer is formed when the vial is shaken. When a glass substrate treated with oxygen plasma is slightly dipped in the interface and taken out of it, the thin film including the $MgB_2$ nanosheets (nano-flakes) on the interface is spread on the glass substrate.

**Claims**

1. An electrically conductive transparent thin film, comprising:

   a compound represented by Chemical Formula 1 and having a layered crystal structure:

   Chemical Formula 1          $MeB_2$

   wherein Me is Au, Al, Ag, Mg, Ta, Nb, Y, W, V, Mo, Sc, Cr, Mn, Os, Tc, Ru, Fe, Zr, or Ti; and
   wherein the electrically conductive thin film has a thickness of less than or equal to 100 nanometers.

2. The electrically conductive thin film of claim 1, wherein the electrically conductive thin film has a light transmittance of greater than or equal to about 80 percent for light at a wavelength of about 550 nanometers at a thickness of less than or equal to 10 nanometers.

3. The electrically conductive thin film of claim 1 or 2, wherein the thin film comprises $AuB_2$, $AlB_2$, $AgB_2$, $MgB_2$, $TaB_2$, $NbB_2$, $YB_2$, $WB_2$, $VB_2$, $MoB_2$, $ScB_2$, or a combination thereof.

4. The electrically conductive thin film of any of claims 1-3, which has an electrical conductivity of greater than or equal to 5000 Siemens per centimeter.

5. The electrically conductive thin film of claim 4, which has electrical conductivity of greater than or equal to 10,000 Siemens per centimeter.

6. The electrically conductive thin film of any of claims 1-5, wherein the compound has a product of an absorption coefficient for light having a wavelength of 550 nanometers and a resistivity value thereof of less than or equal to 35 ohms per square.

7. The electrically conductive thin film of any of claims 1-5, wherein the compound has a product of an absorption coefficient for light having a wavelength of 550 nanometers and a resistivity value thereof of less than or equal to 6 ohms per square.

8. The electrically conductive thin film of any of claims 1-7, which has a transmittance of about 90 percent for light having a wavelength of 550 nanometers and sheet resistance of less than or equal to 60 ohms per square.

9. The electrically conductive thin film of any of claims 1-8, wherein the layered crystal structure belongs to a hexagonal system having a P6/mmm space group.

10. The electrically conductive thin film of claim 9, which maintains the layered crystal structure after being exposed to air for 60 days or more at 25 °C.

11. The electrically conductive thin film of any of claims 1-10, which comprises a plurality of nanosheets including the compound, and the nanosheets contact one another to provide an electrical connection.

12. The electrically conductive thin film of any of claims 1-11, which comprises a continuous deposition film including the compound.

13. An electronic device comprising an electrically conductive thin film according to any of claims 1-12.

14. The electronic device of claim 13, wherein the electronic device is a flat panel display, a touch screen panel, a solar cell, an e-window, an electrochromic mirror, a heat mirror, a transparent transistor, or a flexible display.

**Patentansprüche**

1. Elektrisch leitfähige, transparente Dünnschicht, umfassend:

   eine durch die chemische Formel 1 dargestellte Verbindung mit einer Schichtkristallstruktur:

   Chemische Formel 1          $MeB_2$,

   wobei Me Au, Al, Ag, Mg, Ta, Nb, Y, W, V, Mo, Sc, Cr, Mn, Os, Tc, Ru, Fe, Zr oder Ti ist; und
   wobei die elektrisch leitfähige Dünnschicht eine Dicke von kleiner oder gleich 100 Nanometern aufweist.

2. Elektrisch leitfähige Dünnschicht nach Anspruch 1, wobei die elektrisch leitfähige Dünnschicht für Licht mit einer Wellenlänge von etwa 550 Nanometern bei einer Dicke von kleiner oder gleich 10 Nanometern eine Lichtdurchlässigkeit von größer oder gleich etwa 80 Prozent aufweist.

3. Elektrisch leitfähige Dünnschicht nach Anspruch 1 oder 2, wobei die Dünnschicht $AuB_2$, $AlB_2$, $AgB_2$, $MgB_2$, $TaB_2$, $NbB_2$, $YB_2$, $WB_2$, $VB_2$, $MoB_2$, $ScB_2$ oder eine Kombination davon umfasst.

4. Elektrisch leitfähige Dünnschicht nach einem der Ansprüche 1 bis 3, welche eine elektrische Leitfähigkeit von größer oder gleich 5000 Siemens pro Zentimeter aufweist.

5. Elektrisch leitfähige Dünnschicht nach Anspruch 4, welche eine elektrische Leitfähigkeit von größer oder gleich 10.000 Siemens pro Zentimeter aufweist.

6. Elektrisch leitfähige Dünnschicht nach einem der Ansprüche 1 bis 5, wobei die Verbindung ein Produkt eines Absorptionskoeffizienten für Licht mit einer Wellenlänge von 550 Nanometern und eines Widerstandswerts von kleiner oder gleich 35 Ohm/sq aufweist.

7. Elektrisch leitfähige Dünnschicht nach einem der Ansprüche 1 bis 5, wobei die Verbindung ein Produkt eines Absorptionskoeffizienten für Licht mit einer Wellenlänge von 550 Nanometern und eines Widerstandswerts von kleiner oder gleich 6 Ohm/sq aufweist.

8. Elektrisch leitfähige Dünnschicht nach einem der Ansprüche 1 bis 7, welche für Licht mit einer Wellenlänge von 550 Nanometern eine Durchlässigkeit von 90 Prozent aufweist sowie einen Schichtwiderstand von kleiner oder gleich 60 Ohm/sq.

9. Elektrisch leitfähige Dünnschicht nach einem der Ansprüche 1 bis 8, wobei die Schichtkristallstruktur einem hexagonalen System mit einer Raumgruppe P6/mmm angehört.

10. Elektrisch leitfähige Dünnschicht nach Anspruch 9, welche die Schichtkristallstruktur beibehält nachdem sie 60 Tage lang oder länger bei 25 °C Luft ausgesetzt gewesen ist.

11. Elektrisch leitfähige Dünnschicht nach einem der Ansprüche 1 bis 10, welche eine Mehrzahl Nanoschichten umfasst, welche die Verbindung aufweisen, und wobei sich die Nanoschichten gegenseitig berühren, um eine elektrische Verbindung bereitzustellen.

12. Elektrisch leitfähige Dünnschicht nach einem der Ansprüche 1 bis 11, welche eine kontinuierliche Abscheidungsschicht umfasst, welche die Verbindung aufweist.

13. Elektronische Vorrichtung, die eine elektrisch leitfähige Dünnschicht nach einem der Ansprüche 1 bis 12 umfasst.

14. Elektronische Vorrichtung nach Anspruch 13, wobei die elektronische Vorrichtung ein Flachbildschirm, ein Touchscreen, eine Solarzelle, ein E-Fenster, ein Elektrochrom-Spiegel, ein Heat Mirror, ein transparenter Transistor oder ein flexibles Display ist.

**Revendications**

1. Film mince transparent électroconducteur, comprenant :

   un composé représenté par la formule chimique 1 et ayant une structure cristalline stratifiée :

   formule chimique 1          $MeB_2$

   où Me est Au, Al, Ag, Mg, Ta, Nb, Y, W, V, Mo, Sc, Cr, Mn, Os, Tc, Ru, Fe, Zr, ou Ti ; et
   le film mince électroconducteur ayant une épaisseur inférieure ou égale à 100 nanomètres.

2. Film mince électroconducteur selon la revendication 1, le film mince électroconducteur ayant une transmittance de la lumière supérieure ou égale à environ 80 % pour une lumière à une longueur d'onde d'environ 550 nanomètres à une épaisseur inférieure ou égale à 10 nanomètres.

3. Film mince électroconducteur selon la revendication 1 ou 2, le film mince comprenant $AuB_2$, $AlB_2$, $AgB_2$, $MgB_2$, $TaB_2$, $NbB_2$, $YB_2$, $WB_2$, $VB_2$, $MoB_2$, $ScB_2$, ou une combinaison de ceux-ci.

4. Film mince électroconducteur selon l'une quelconque des revendications 1 à 3, qui a une conductivité électrique supérieure ou égale à 5 000 Siemens par centimètre.

5. Film mince électroconducteur selon la revendication 4, qui a une conductivité électrique supérieure ou égale à 10 000 Siemens par centimètre.

6. Film mince électroconducteur selon l'une quelconque des revendications 1 à 5, le composé ayant un produit d'un coefficient d'absorption pour une lumière ayant une longueur d'onde de 550 nanométriques et une valeur de résistivité de celle-ci inférieure ou égale à 35 ohms par carré.

7. Film mince électroconducteur selon l'une quelconque des revendications 1 à 5, le composé ayant un produit d'un coefficient d'absorption pour une lumière ayant une longueur d'onde de 550 nanométriques et une valeur de résistivité de celle-ci inférieure ou égale à 6 ohms par carré.

8. Film mince électroconducteur selon l'une quelconque des revendications 1 à 7, qui a une transmittance d'environ 90 % pour une lumière ayant une longueur d'onde de 550 nanomètres et une résistance de feuille inférieure ou égale à 60 ohms par carré.

9. Film mince électroconducteur selon l'une quelconque des revendications 1 à 8, la structure cristalline en couches appartenant à un système hexagonal ayant un groupe spatial P6/mmm.

10. Film mince électroconducteur selon la revendication 9, qui maintient la structure cristalline en couches après avoir été exposé à l'air pendant 60 jours ou plus à 25 °C.

11. Film mince électroconducteur selon l'une quelconque des revendications 1 à 10, qui comprend une pluralité de nanofeuilles comprenant le composé, et les nanofeuilles étant en contact les unes avec les autres pour fournir une connexion électrique.

12. Film mince électroconducteur selon l'une quelconque des revendications 1 à 11, comprenant un film de dépôt continu comprenant le composé.

13. Dispositif électronique comprenant un film mince électroconducteur selon l'une quelconque des revendications 1 à 12.

14. Dispositif électronique selon la revendication 13, le dispositif électronique étant un écran plat, un écran tactile, une cellule solaire, une fenêtre électronique, un miroir électrochromique, un miroir thermique, un transistor transparent ou un écran flexible.

# FIG. 1

Hexagonal System of 1:2 composition
P6/mmm (191)

# FIG. 2

# FIG. 3

MoB$_2$

Intensity (a. u.)

Diffraction Angle 2θ(degree)

FIG. 4

FIG. 5

MgB$_2$

Intensity
(a. u.)

Diffraction Angle 2θ(degree)

# FIG. 6

# FIG. 7

MoB$_2$ (60 day)

Intensity (a. u.)

Diffraction Angle 2θ(degree)

## FIG. 8

# FIG. 9

MoB$_2$ (120 day)

Intensity (a. u.)

Diffraction Angle 2θ(degree)

FIG. 10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20080064605 A
- US 20040253501 A
- DE 4001401
- JP H0422622 B

**Non-patent literature cited in the description**

- **GEORG KRESSE ; JURGEN FURTHMULLER.** The Vienna Ab-initio Simulation Package, , Institut fur Materialphysik. Universitat Wien, 24 August 2005, vol. 8, A-1130
- **JINWOONG KIM.** *Journal of Applied Physics,* 2011, vol. 110, 083501